# EUROPEAN PATENT SPECIFICATION

(11) **EP 3 736 089 B1**
(45) Date of publication and mention of the grant of the patent: **02.08.2023**
(21) Application number: 18885237.0
(22) Date of filing: 30.01.2018
(51) Int. Cl.: B25B 21/00, B60S 5/06

(54) **TWISTING TOOL AND AUTOMOBILE BATTERY SWAP DEVICE COMPRISING SAME**
VERDREHWERKZEUG UND KRAFTFAHRZEUGBATTERIEAUSTAUSCHVORRICHTUNG DAMIT
OUTIL DE TORSION ET DISPOSITIF D'ÉCHANGE DE BATTERIE D'AUTOMOBILE COMPRENANT LEDIT OUTIL

(30) Priority: 06.12.2017 CN 201711273602
(43) Date of publication of application: 11.11.2020
(73) Proprietor: NIO (Anhui) Holding Co., Ltd., Hefei City, Anhui Province (CN)
(72) Inventor: DING, Xikun, Anting, Jiading, Shangai (CN)
(74) Representative: Vossius & Partner Patentanwälte Rechtsanwälte mbB
(86) International application number: PCT/CN2018/074577
(87) International publication number: WO 2019/109501

(56) References cited:
- CN-A- 104 209 912
- CN-A- 105 848 833
- CN-U- 201 645 391
- CN-U- 201 645 391
- CN-U- 205 254 877
- CN-U- 205 872 015
- CN-U- 205 872 015
- FR-A1- 2 768 355
- US-A- 3 797 335

## Description

### Technical Field

The invention relates to the technical field of automated tools. Specifically, the invention relates to a screwing tool, and further relates to a vehicle battery swap device comprising same.

### Background Art

In recent years, under the pressure of energy shortage and environmental pollution, new energy vehicles have attracted widespread attention and developed rapidly, and thus become increasingly popular.

Common approaches to supplement energy for new energy vehicles include a charging mode, a battery swap mode, and the like. Compared with the charging mode, the battery swap mode has the advantage of a high energy replenishment speed, and can greatly shorten energy replenishment time.

Manual battery swapping is inefficient and is not suitable for an industrial application in battery swap stations. Therefore, in order to achieve rapid and efficient automated battery swapping, in a battery swap station for new energy vehicles, a vehicle battery swap device with an automated tool, such as a battery swap trolley, is typically used to automatically load/unload a battery into/from a new energy vehicle.

FR 2 768 355 Al discloses a pistol grip portable electric drill/screwdriver with an integral light source. The drill/screwdriver has a battery driven electric motor with first stage reduction gear in the hand grip. A ninety-degree bevel gear turns the drive at right angles to the handle to drive the tool holder. A light bulb above the tool holder illuminates the work area.

### Summary of the Invention

An object of one aspect of the invention is to provide an improved screwing tool.

An object of another aspect of the invention is to provide an improved vehicle battery swap device.

To achieve the foregoing objects, in a first aspect of the invention, provided is a screwing tool. The screwing tool comprises an electric motor, a speed reducer, and a screwing head, wherein the electric motor is connected to the speed reducer and drives the screwing head by means of the speed reducer, and
the electric motor and the speed reducer are arranged at an angle with respect to an axis of the screwing head.

Optionally, in the screwing tool as described above, the angle is 90 degrees.

In the screwing tool according to the invention, it is further provided with a crossed-axis gearing mechanism; and the crossed-axis gearing mechanism is disposed between the speed reducer and the screwing head and is provided with a first member coaxially connected to the screwing head and a second member coaxially connected to the speed reducer, the first member being adapted to engage with the second member to achieve crossed-axis gearing.

Optionally, in the screwing tool as described above, a first end, which faces the first member, of the screwing head is provided with a drive rod, and the drive rod and the first member are connected in a form-fitting manner, so as to limit relative circumferential rotation of the first member and the drive rod, and to guide relative axial sliding of the first member and the drive rod.

Optionally, in the screwing tool as described above, the crossed-axis gearing mechanism is a bevel gear mechanism, the first member is a first bevel gear, the second member is a second bevel gear, and the size of the first bevel gear is greater than that of the second bevel gear.

Optionally, in the screwing tool as described above, the crossed-axis gearing mechanism is a worm and worm gear mechanism, a worm gear in the worm and worm gear mechanism is connected to the screwing head, and a worm in the worm and worm gear mechanism is connected to the speed reducer.

Optionally, in the screwing tool as described above, the screwing tool is further provided with a biasing member which biases the screwing head and the first member in opposite directions.

Optionally, in the screwing tool as described above, the biasing member is a coil spring.

In the screwing tool according to the invention, a second end, which faces away from the first member, of the screwing head is provided with a meshing recess used for screwing, a pin is disposed in the meshing recess, and a biasing member is disposed between the pin and the screwing head to bias the pin and the screwing head in opposite directions.

To achieve the foregoing object, a second aspect of the invention provides a vehicle battery swap device, which is equipped with at least one screwing tool as described above in any item of the first aspect.

### Brief Description of the Drawings

The disclosure of the invention will be more apparent with reference to the accompanying drawings. It should be appreciated that these accompanying drawings are merely used for the purpose of description, and are not intended to limit the scope of protection of the invention. In the figures:
Fig. 1 schematically shows, in an exploded view, a screwing tool according to an embodiment of the invention; and
Fig. 2 schematically shows, in an assembled view, the screwing tool in Fig. 1.

### Detailed Description of Embodiments

Specific embodiments of the invention are described below in detail with reference to the accompanying drawings. In the accompanying drawings, the same reference numerals denote the same or corresponding technical features.

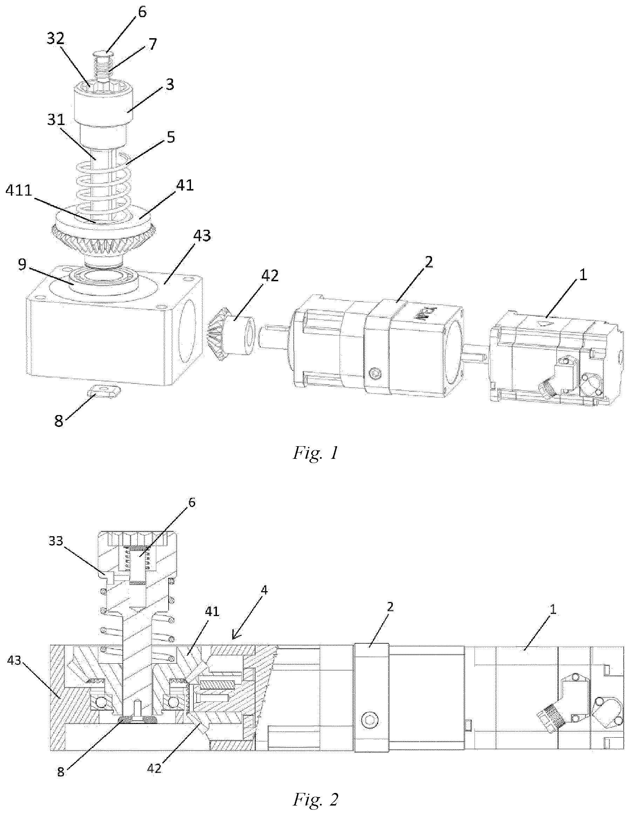

Fig. 1 schematically shows, in an exploded view, a screwing tool according to an embodiment of the invention.

As shown in the figure, the screwing tool comprises an electric motor 1, a speed reducer 2, and a screwing head 3. In the embodiment shown in the figure, the electric motor 1 can be used to power the screwing tool. The speed reducer 2 can reduce the rotational speed of the electric motor, and also increase output torque and transfer same to the screwing head 3. The screwing head 3 is adapted to screw a component to be screwed (for example, a bolt, not shown in the figure), to tighten or loosen same.

It can be appreciated that, engagement portions of the screwing head 3 and the component to be screwed may be of complementary shapes. For example, when the engagement portion of the component to be screwed is a protrusion, the engagement portion of the screwing head may be a recess; and when the engagement portion of the component to be screwed is a recess, the engagement portion of the screwing head may be a protrusion.

In this application, the specific type of the electric motor 1 is not particularly limited. It can be appreciated that, in an optional embodiment, an electric motor (for example, a servo motor) of an appropriate type may be selected according to specific needs to achieve a driving function. As an example, a screwing action of the screwing head is controlled by means of a control instruction. As a more specific example, the electric motor is controlled to operate, so that the speed reducer and the screwing head operate together, achieving a screwing action of the screwing head. It should be understood that, the control instruction mentioned herein is usually implemented in software, and may be implemented in an apparatus using the screwing tool.

Similarly, in different embodiments, a speed reducer 2 in a different form may be selected as required. For example, a speed reducer having a desired reduction ratio may be selected as required by an application scenario. In examples of this application, it can be appreciated that, in an optional embodiment, a reduction transmission manner in any other form is not excluded. In an optional embodiment, belt transmission can be used to protect the product from a strong impact.

As shown in the figure, the electric motor 1 is connected to the speed reducer 2, and output of the electric motor 1 can be directly or indirectly input to the speed reducer 2. Exemplarily but not limiting, a connecting shaft (not marked) disposed in the electric motor 1 can extend into a coupler (not marked) in the speed reducer 2, achieving a connection between the electric motor 1 and the speed reducer 2. The speed reducer 2 changes the rotational speed of the electric motor, and then the speed reducer 2 directly or indirectly drives the screwing head 3, to tighten or loosen the component to be screwed. A bolt is a typical example of the component to be screwed. However, it can be appreciated that, in addition to the bolt, the screwing head 3 may be used to screw any component that needs to be screwed, provided that a screwing end of the screwing head 3 is designed to be connected to the engagement portion of the component to be screwed in a form-fitting manner.

In the embodiment shown in the figure, the electric motor 1 and the speed reducer 2 are arranged at an angle of 90 degrees with respect to an axis of the screwing head 3. In this way, the electric motor and the speed reducer are not arranged in an extension direction of the axis of the screwing head 3, thus facilitating reducing the overall longitudinal length of the screwing tool, and being applicable to screwing the bolt (or another component to be screwed, the same below) in a compact space. It can be appreciated that, in an optional embodiment, the electric motor and the speed reducer may also be arranged at another angle with respect to the axis of the screwing head, for example, but not limited to, an angle of 30 degrees, 45 degrees, 60 degrees, or any other angle between 0 degrees and 180 degrees. The overall longitudinal length of the screwing tool can also be reduced to a certain degree. It should be understood that, the other angles described above may be realized by setting a universal shaft between the speed reducer 2 and the second member 42. Other manners that enable change of the angle are also feasible. It can be understood that, the other angles herein may not include a linear angle, namely, an angle of 0 degrees or 180 degrees, so as to ensure that the electric motor and the speed reducer are not located in the extension direction of the axis of the screwing head.

In all examples of this application, the term "longitudinal" is used to describe the length of the screwing tool in the axial direction of the screwing head 3. This application is intended to illustrate that, by arranging the electric motor 1 and the speed reducer 2 at an angle (for example, 90 degrees) with respect to the axis of the screwing head 3, the length of the screwing tool in the axial direction of the electric motor 1 and the speed reducer 2 is reduced, so that the length in the axial direction of the electric motor 1 and the speed reducer 2 is reduced when the screwing tool is used to screw a manipulated object. Where operation space has a certain limitation in a particular direction, the screwing tool of this application is particularly advantageous. For example, during swapping of a battery of a new energy vehicle, by using the screwing tool of this application, the lifting height of the vehicle is reduced during battery swapping, the requirement on the space of a battery swap platform is lowered, the space effectiveness for arranging the battery swap platform can be reduced, and the manufacturing cost can be reduced.

In the embodiment shown in the figure, the speed reducer 2 does not directly output power to the screwing head 3; instead, a crossed-axis gearing mechanism 4 is disposed therebetween. It can be seen that, an output shaft of the speed reducer 2 and the screwing head 3 are staggered, and the crossed-axis gearing mechanism 4 achieves transmission therebetween. It should be understood that, "crossed" herein may include intersection in the same plane and staggering in different planes. That is, axes of an input shaft and an output shaft of the crossed-axis gearing mechanism 4 are in different planes.

As shown in the figure, the crossed-axis gearing mechanism 4 is disposed between the speed reducer 2 and the screwing head 3. The crossed-axis gearing mechanism 4 is provided with a first member 41 coaxially connected to the screwing head 3 and a second member 42 coaxially connected to the speed reducer 2, the first member 41 being adapted to engage with the second member 42 to achieve crossed-axis gearing. To protect the first member 41 and the second member 42, a housing 43 is further shown in the figure. The first member 41 and the second member 43 engage with each other inside the housing 43.

In an optional embodiment, a transmission ratio between the first member 41 and the second member 43 may be provided as required.

In the specific example shown in the figure, the crossed-axis gearing mechanism 4 may be provided as a bevel gear mechanism. It can be seen that, the first member 41 is a first bevel gear, and the second member 42 is a second bevel gear. Such a bevel gear mechanism can effectively redirect a rotational output of the speed reducer, and then transfer same to the screwing head.

The size of the first bevel gear is greater than that of the second bevel gear in the example shown in the figure. Such a design is adapted to further decelerate the output of the speed reducer, and also to increase the torque output. Through two-stage speed reduction, i.e. from the electric motor to the speed reducer and from the speed reducer to the bevel gear mechanism, the output torque of the electric motor can be appropriately increased effectively, so as to meet the demand. It can be seen that, with the screwing tool thus designed, it is only required to use an electric motor with small output torque in order to achieve large-torque output during the screwing operation.

It can be understood that, a crossed-axis gearing mechanism in another form may also be used in an optional embodiment. For example, the crossed-axis gearing mechanism may be a worm and worm gear mechanism. In this case, a worm gear in the worm and worm gear mechanism is connected to the screwing head as the first member 41, and a worm in the worm and worm gear mechanism is connected to the speed reducer 2 as the second member 42. It can be seen that the worm and worm gear mechanism also enables similar speed reduction and torque increase, so that a small-sized electric motor can be used to achieve large-torque output.

Where the small-sized electric motor is used to achieve large-torque output as described above, the assembly dimension and manufacturing cost, etc. of the screwing tool are further reduced.

It can be appreciated that, in an optional embodiment, the crossed-axis gearing mechanism may also be omitted; instead, a crossed-axis connection between the speed reducer 2 and the screwing head 3 is directly achieved. In this way, the structure of the screwing tool is more compact, thereby facilitating miniaturization of the product, saving the operation space, and reducing the manufacturing cost.

As shown in the figure, a first end, which faces the first member 41, of the screwing head 3 may be provided with a drive rod 31. In the embodiment shown in the figure, the drive rod 31 and the first member 41 may be connected in a form-fitting manner, so that the drive rod 31 and the first member 41 can only longitudinally slide with respect to each other, thus limiting relative circumferential rotation of the first member 41 and the drive rod 31, and guiding relative axial sliding of the first member 41 and the drive rod 31.

Specifically, in the embodiment shown in the figure, it is exemplarily shown that the drive rod 31 has a square cross-section, and the first member 41 is provided with a square hole 411 of a matching shape. Thus, the drive rod 31 can be inserted into the square hole 411, so that the drive rod 31 and the first member 41 can only longitudinally slide with respect to each other.

In order to absorb the impact on the screwing tool during a screwing operation, and also ensure engagement of the screwing tool to the component to be screwed all the time, the screwing tool may be further provided with a biasing member 5 which biases the screwing head 3 and the first member 41 in opposite directions.

In some cases, the biasing member 5 may be necessary. For example, in one case, the component to be screwed, such as a bolt, is pre-loaded to a battery pack. After the battery pack is aligned to a battery mounting position of a new energy vehicle, it is required to tightly press the component to be screwed in advance before screwing it effectively. Likewise, it can be appreciated that, in some specific embodiments, if it is not required to tightly press the component to be screwed in advance, the biasing member may be omitted.

In the embodiment shown in the figure, the biasing member 5 may be a coil spring, which encircles the drive rod 31, with two ends respectively abutting against the screwing head and the first member 41. It can be appreciated that, in other optional embodiments, a biasing member in another form, especially, a flexible biasing member, may also be used. Details are not described herein again.

A second end, which faces away from the first member 41, of the screwing head 3 is provided with a meshing recess 32 used for screwing. In this case, the screwing head 3 is in the form of a screwing socket. The meshing recess 32 has an internal shape matching the component to be screwed for ease of circumferential engagement therebetween, so as to screw the component to be screwed. For example, when the component to be screwed is a hexagon headed bolt, the meshing recess 32 has an inner hexagonal recess, which is adapted to engage with a hexagonal bolt head. It can be appreciated that, the shape of each of the meshing recess and the bolt head is not limited to a hexagonal shape, and any other non-circular shape is also applicable.

A pin 6 is disposed in the meshing recess 32. A biasing member 7 is also disposed between the pin 6 and the screwing head 3, to bias the pin 6 and the screwing head 3 in opposite directions. The biasing member 7 may also be a coil spring. Engagement of the pin 6 in the meshing recess can be seen clearly from Fig. 2.

In an optional embodiment, the second end, which faces away from the first member 41, of the screwing head 3 may be alternatively provided with a meshing protrusion used for screwing. It can be understood that, in this case, the component to be screwed is provided with a corresponding matching shape, so that the meshing protrusion easily drives the component to be screwed to achieve a screwing operation.

Fig. 2 schematically shows, in an assembled view, the screwing tool in Fig. 1.

It can be seen from the figure that, in this embodiment, the electric motor 1, the speed reducer 2, the socket 3, and the crossed-axis gearing mechanism 4 of the screwing tool together form an L shape. Compared with a screwing tool in which the electric motor 1, the speed reducer 2, the socket 3, and the like are arranged in a straight line, the longitudinal dimension and occupied space are obviously reduced.

From Fig. 2, the first member 41 is mounted inside the housing 43 of the crossed-axis gearing mechanism 4 via a bearing 9. To prevent the drive rod of the screwing head 3 from disengaging from the hole on the first member 41, and thus ensure operation reliability of the screwing tool, a spacer 8 may be mounted at the end of the drive rod. It can be understood that, in different embodiments, the spacer 8 may be engaged to the end of the drive rod via a bolt or a pin, etc., or may also be clamped in a circumferential groove at the end of the drive rod, to thus prevent disengaging. Furthermore, in an optional embodiment, the same effect may also be achieved by using a latch or a circlip, etc. in a radial direction.

It can be seen from Fig. 2 that, a slot 33 is formed on a side surface of the screwing head 3. After the pin 6 is inserted from the meshing recess 32 of the screwing head 3, the latch (not shown in the figures) may be inserted into the slot 33 with the end of the latch extending into a longitudinal chute (not shown in the figures) on a side surface of the pin 6, so that the pin 6 can longitudinally slide in the meshing recess 32 of the screwing head 3 without disengaging therefrom. The biased pin 6 can further ensure engagement with the component to be screwed, and enhance operation reliability.

Another aspect of the invention also provides a vehicle battery swap device, wherein the vehicle battery swap device may be equipped with at least one screwing tool in any of the embodiments described above. It can be appreciated that, the vehicle battery swap device thus disposed has corresponding advantages. For example, the vehicle battery swap device may be a battery swap trolley, which is applicable to commuting between a battery swap platform and a battery storage bin, demounts a battery to be replenished with energy from the new energy vehicle by using the screwing tool and delivers same to the battery storage bin, and takes a fresh battery from the battery storage bin and delivers same to the battery swap platform and then mounts same into the new energy vehicle. In different embodiments, this battery swap trolley may be a tracked battery swap trolley or a trackless trolley of intelligent control.

The technical scope of the invention is not merely limited to the above description. Those skilled in the art can make various changes and modifications to the above embodiments without departing from the technical idea of the invention, and these changes and modifications shall fall within the scope of the invention, which is disclosed in the appended claims.

## Claims

1. A screwing tool comprising an electric motor (1), a speed reducer (2), and a screwing head (3), wherein the electric motor (1) is connected to the speed reducer (2), the electric motor (1) drives the screwing head (3) by means of the speed reducer (2), wherein,
the electric motor (1) and the speed reducer (2) are arranged at an angle with respect to an axis of the screwing head (3), and
the screwing tool is further provided with a crossed-axis gearing mechanism (4); and the crossed-axis gearing mechanism (4) is disposed between the speed reducer (2) and the screwing head (3) and is provided with a first member (41) coaxially connected to the screwing head (3) and a second member (42) coaxially connected to the speed reducer (2), the first member (41) being adapted to engage with the second member (42) to achieve crossed-axis gearing,
**characterized in that**
a second end, which faces away from the first member (41), of the screwing head (3) is provided with a meshing recess (32) used for screwing, a pin (6) is disposed in the meshing recess (32), and a biasing member (7) is disposed between the pin (6) and the screwing head (3) to bias the pin (6) and the screwing head (3) in opposite directions.

2. The screwing tool according to claim 1, **characterized in that** the angle is 90 degrees.

3. The screwing tool according to claim 1, **characterized in that** a first end, which faces the first member (41), of the screwing head (3) is provided with a drive rod (31), and the drive rod (31) and the first member (41) are connected in a form-fitting manner, so as to limit relative circumferential rotation of the first member (41) and the drive rod (31), and to guide relative axial sliding of the first member (41) and the drive rod (31).

4. The screwing tool according to claim 1 or 3, **characterized in that** the crossed-axis gearing mechanism (4) is a bevel gear mechanism, the first member (41) is a first bevel gear, the second member (42) is a second bevel gear, and the size of the first bevel gear is greater than that of the second bevel gear.

5. The screwing tool according to claim 1 or 3, **characterized in that** the crossed-axis gearing mechanism (4) is a worm and worm gear mechanism, a worm gear in the worm and worm gear mechanism is connected to the screwing head (3), and a worm in the worm and worm gear mechanism is connected to the speed reducer (2).

6. The screwing tool according to claim 1 or 3, **characterized in that** the screwing tool is further provided with a biasing member (7) which biases the screwing head (3) and the first member (41) in opposite directions.

7. The screwing tool according to claim 6, **characterized in that** the biasing member (7) is a coil spring.

8. A vehicle battery swap device, **characterized in that** the vehicle battery swap device is equipped with at least one screwing tool according to any one of preceding claims 1 to 7.

## Patentansprüche

1. Schraubwerkzeug mit einem Elektromotor (1), einem Untersetzungsgetriebe (2) und einem Schraubkopf (3), wobei der Elektromotor (1) mit dem Untersetzungsgetriebe (2) verbunden ist, der Elektromotor (1) den Schraubkopf (3) über das Untersetzungsgetriebe (2) antreibt, wobei
der Elektromotor (1) und das Untersetzungsgetriebe (2) in einem Winkel in Bezug auf eine Achse des Schraubkopfes (3) angeordnet sind, und
das Schraubwerkzeug ferner mit einem achsgekreuzten Getriebemechanismus (4) versehen ist; und der achsgekreuzte Getriebemechanismus (4) zwischen dem Untersetzungsgetriebe (2) und dem Schraubkopf (3) angeordnet ist und mit einem ersten Element (41), das koaxial mit dem Schraubkopf (3) verbunden ist, und einem zweiten Element (42), das koaxial mit dem Untersetzungsgetriebe (2) verbunden ist, versehen ist, wobei das erste Element (41) dazu angepasst ist, mit dem zweiten Element (42) in Eingriff zu kommen, um ein achsgekreuztes Getriebe zu erreichen,
**dadurch gekennzeichnet, dass**
ein zweites Ende des Schraubkopfes (3), das von dem ersten Element (41) abgewandt ist, mit einer Eingriffsausnehmung (32) versehen ist, die zum Schrauben verwendet wird, ein Stift (6) in der Eingriffsausnehmung (32) angeordnet ist und ein Vorspannelement (7) zwischen dem Stift (6) und dem Schraubkopf (3) angeordnet ist, um den Stift (6) und den Schraubkopf (3) in entgegengesetzten Richtungen vorzuspannen.

2. Schraubwerkzeug gemäß Anspruch 1, **dadurch gekennzeichnet, dass** der Winkel 90 Grad beträgt.

3. Schraubwerkzeug gemäß Anspruch 1, **dadurch gekennzeichnet, dass** ein erstes, dem ersten Element (41) zugewandtes Ende des Schraubkopfes (3) mit einer Antriebsstange (31) versehen ist und die Antriebsstange (31) und das erste Element (41) formschlüssig verbunden sind, um eine relative Umfangsdrehung des ersten Elements (41) und der Antriebsstange (31) zu begrenzen und ein relatives axiales Gleiten des ersten Elements (41) und der Antriebsstange (31) zu führen.

4. Schraubwerkzeug gemäß Anspruch 1 oder 3, **dadurch gekennzeichnet, dass** das achsgekreuzte Getriebe (4) ein Kegelradgetriebe ist, das erste Element (41) ein erstes Kegelrad ist, das zweite Element (42) ein zweites Kegelrad ist und die Größe des ersten Kegelrades größer als die des zweiten Kegelrades ist.

5. Schraubwerkzeug gemäß Anspruch 1 oder 3, **dadurch gekennzeichnet, dass** das achsgekreuzte Getriebe (4) ein Schneckengetriebe ist, ein Schneckenrad des Schneckengetriebes mit dem Schraubkopf (3) verbunden ist und eine Schnecke des Schneckengetriebes mit dem Untersetzungsgetriebe (2) verbunden ist.

6. Schraubwerkzeug gemäß Anspruch 1 oder 3, **dadurch gekennzeichnet, dass** das Schraubwerkzeug ferner mit einem Vorspannelement (7) versehen ist, das den Schraubkopf (3) und das erste Element (41) in entgegengesetzten Richtungen vorspannt.

7. Schraubwerkzeug gemäß Anspruch 6, **dadurch gekennzeichnet, dass** das Vorspannelement (7) eine Schraubenfeder ist.

8. Fahrzeugbatterieauswechselvorrichtung, **dadurch gekennzeichnet, dass** die Fahrzeugbatterieauswechselvorrichtung mit mindestens einem Schraubwerkzeug gemäß einem der vorhergehenden Ansprüche 1 bis 7 ausgestattet ist.

## Revendications

1. Outil de vissage comprenant un moteur électrique (1), un réducteur de vitesse (2), et une tête de vissage (3), dans lequel le moteur électrique (1) est relié au réducteur de vitesse (2), le moteur électrique (1) entraîne la tête de vissage (3) au moyen du réducteur de vitesse (2), dans lequel
le moteur électrique (1) et le réducteur de vitesse (2) sont disposés à un angle par rapport à un axe de la tête de vissage (3), et
l'outil de vissage est en outre muni d'un mécanisme d'engrenage à axes croisés (4) ; et le mécanisme d'engrenage à axes croisés (4) est disposé entre le réducteur de vitesse (2) et la tête de vissage (3) et est muni d'un premier organe (41) en liaison coaxiale avec la tête de vissage (3) et d'un second organe (42) en liaison coaxiale avec le réducteur de vitesse (2), le premier organe (41) étant conçu pour venir en prise avec le second organe (42) pour obtenir l'engrenage à axes croisés,
**caractérisé en ce que**
une seconde extrémité, qui fait face à l'opposé du premier organe (41), de la tête de vissage (3) est munie d'un évidement d'engrènement (32) utilisé pour le vissage, une goupille (6) est disposée dans l'évidement d'engrènement (32), et un organe de polarisation (7) est disposé entre la goupille (6) et la tête de vissage (3) pour polariser la goupille (6) et la tête de vissage (3) dans des directions opposées.

2. Outil de vissage selon la revendication 1, **caractérisé en ce que** l'angle est égal à 90 degrés.

3. Outil de vissage selon la revendication 1, **caractérisé en ce qu'**une première extrémité, qui fait face au premier organe (41), de la tête de vissage (3) est munie d'une tige d'entraînement (31), et la tige d'entraînement (31) et le premier organe (41) sont reliés en adéquation de forme, de façon à limiter une rotation circonférentielle relative du premier organe (41) et de la tige d'entraînement (31), et à guider un coulissement axial relatif du premier organe (41) et de la tige d'entraînement (31).

4. Outil de vissage selon la revendication 1 ou 3, **caractérisé en ce que** le mécanisme d'engrenage à axes croisés (4) est un mécanisme d'engrenage conique, le premier organe (41) est un premier engrenage conique, le second organe (42) est un second engrenage conique, et la taille du premier engrenage conique est supérieure à celle du second engrenage conique.

5. Outil de vissage selon la revendication 1 ou 3, **caractérisé en ce que** le mécanisme d'engrenage à axes croisés (4) est un mécanisme d'engrenage à roue et à vis sans fin, une vis sans fin dans le mécanisme d'engrenage à roue et à vis sans fin est reliée à la tête de vissage (3), et une roue dans le mécanisme d'engrenage à roue et à vis sans fin est reliée au réducteur de vitesse (2).

6. Outil de vissage selon la revendication 1 ou 3, **caractérisé en ce que** l'outil de vissage est en outre muni d'un organe de polarisation (7) qui polarise la tête de vissage (3) et le premier organe (41) dans des directions opposées.

7. Outil de vissage selon la revendication 6, **caractérisé en ce que** l'organe de polarisation (7) est un ressort hélicoïdal.

8. Dispositif d'échange de batterie de véhicule, **caractérisé en ce que** le dispositif d'échange de batterie de véhicule est équipé d'au moins un outil de vissage selon l'une quelconque des revendications précédentes 1 à 7.
